(19) Europäisches Patentamt
European Patent Office
Office européen des brevets

(11) Veröffentlichungsnummer: **0 357 727 B1**

(12) # EUROPÄISCHE PATENTSCHRIFT

(45) Veröffentlichungstag der Patentschrift: **24.11.93**

(51) Int. Cl.⁵: **C09K 19/30**, C09K 19/34, C09K 19/20, C09K 19/42, G02F 1/13

(21) Anmeldenummer: **89902647.0**

(22) Anmeldetag: **27.02.89**

(86) Internationale Anmeldenummer: **PCT/EP89/00182**

(87) Internationale Veröffentlichungsnummer: **WO 89/08689 (21.09.89 89/23)**

(54) **2,3-DIFLUORBENZOLDERIVATE UND IHRE VERWENDUNG ALS KOMPONENTEN FLÜSSIGKRISTALLINER MEDIEN.**

(30) Priorität: **10.03.88 DE 3807863**

(43) Veröffentlichungstag der Anmeldung: **14.03.90 Patentblatt 90/11**

(45) Bekanntmachung des Hinweises auf die Patenterteilung: **24.11.93 Patentblatt 93/47**

(84) Benannte Vertragsstaaten: **CH DE FR GB IT LI NL**

(56) Entgegenhaltungen:
**EP-A- 0 084 194**
**EP-A- 0 126 601**
**EP-A- 0 133 489**
**EP-A- 0 211 646**
**EP-A- 0 247 466**
**WO-A-87/04158**
**WO-A-87/05017**
**WO-A-87/05018**
**DE-A- 3 510 434**
**GB-A- 2 061 256**
**US-A- 3 915 883**

(73) Patentinhaber: **MERCK PATENT GmbH**
**Postfach,**
**Frankfurter Strasse 250**
**D-64271 Darmstadt(DE)**

(72) Erfinder: **REIFFENRATH, Volker**
**Jahnstrasse 18**
**D-6101 Ro dorf(DE)**
Erfinder: **KRAUSE, Joachim**
**Samuel-Morse-Strasse 14**
**D-6110 Dieburg(DE)**
Erfinder: **WÄCHTLER, Andreas**
**Goethestrasse 34**
**D-6103 Griesheim(DE)**
Erfinder: **WEBER, Georg**
**Wilhelm-Leuschner-Strasse 38**
**D-6101 Erzhausen(DE)**
Erfinder: **GEELHAAR, Thomas**
**Trajanstrasse 12**
**D-6500 Mainz(DE)**

EP 0 357 727 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft 2,3-Difluorbenzolderivate der Formel I,

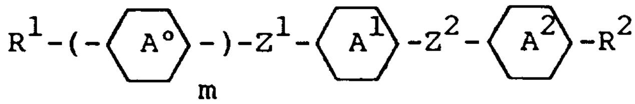

I

worin

$R^1$ und $R^2$

jeweils unabhängig voneinander unsubstituiertes, einfach durch Cyan oder mindestens einfach durch Fluor oder Chlor substituiertes Alkyl mit 1-15 C-Atomen oder Alkenyl mit 3-15 C-Atomen, wobei in diesen Resten auch eine $CH_2$-Gruppe durch -O-, -CO-, -O-CO-, -CO-O- oder -O-CO-O- ersetzt sein kann,

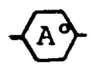

1,4-Phenylen oder trans-1,4-Cyclohexylen,

m

1 oder 2,

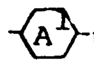 und 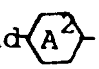

jeweils unabhängig voneinander trans-1,4-Cyclohexylen, oder unsubstituiertes oder ein oder zweifach durch Fluor substituiertes 1,4-Phenylen, worin auch eine CH-Gruppe durch N ersetzt sein kann , wobei mindestens eine der Gruppen

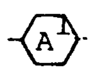 und 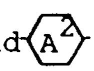

2,3-Difluor-1,4-Phenylen ist,

$Z^1$ und $Z^2$

jeweils unabhängig voneinander -CO-O-, -O-CO-, $-CH_2O-$, $-OCH_2-$ oder $-CH_2CH_2-$bedeuten,

mit der Maßgabe, daß im Falle

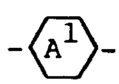

= 2,3-Difluor-1,4-Phenylen, m = 1 und

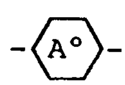 = 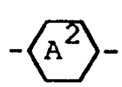

= trans-1,4-Cyclohexylen, $Z^1$ oder $Z^2$ gewählt wird aus der Gruppe bestehend aus -CO-O-, -O-CO-, $-CH_2O-$ und $-OCH_2-$.

Der Einfachheit halber bedeuten im folgenden Cyc eine 1,4-cyclohexylengruppe, Pyd eine Pyridin-2,5-diylgruppe, Phe eine 1,4-Phenylengruppe, PheF eine Gruppe der Formel

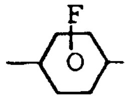,

und

$PheF_2$ eine Gruppe der Formel

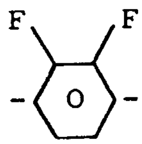.

Die Verbindungen der Formel I können als Komponenten flüssigkristalliner Phasen verwendet werden, insbesondere für Displays, die auf dem Prinzip der verdrillten Zelle, dem Guest-Host-Effekt, dem Effekt der Deformation aufgerichteter Phasen oder dem Effekt der dynamischen Streuung beruhen.

Verbindungen der Formel I mit negativer Anisotropie der Dielektrizitätskonstante ($\Delta\epsilon = \epsilon_{\parallel} - \epsilon_{\perp} < 0$, wobei $\epsilon_{\parallel}$ die Dielektrizitätskonstante entlang der Moleküllängsachse und $\epsilon_{\perp}$ die Dielektrizitätskonstante senkrecht dazu bedeuten) werden in einem elektrischen Feld mit ihren Moleküllängsachsen senkrecht zur Feldrichtung ausgerichtet. Dieser Effekt ist bekannt und wird zur Steuerung der optischen Transparenz in verschiedenen Flüssigkristallanzeigen ausgenützt, so z.B. in Flüssigkristallzellen vom Lichtstreuungstyp (dynamische Streuung), vom sogenannten DAP-Typ (Deformation aufgerichteter Phasen) oder vom Gast/Wirt-Typ (guest host interaction).

Bei Verwendung eines Flüssigkristalls mit positiver dielektrischer Anisotropie wird dessen homogene Orientierung (welche durch Behandlung der Plattenoberfläche erreicht wird) durch Anlegen einer Spannung homöotrop ausgerichtet, d.h. die Zelle wird von "farbig" auf "farblos" geschaltet. Auf diese Weise werden farblose Zeichen auf farbigem Untergrund angezeigt. Demgegenüber wird bei Verwendung eines Flüssigkristalls mit negativer dielektrischer Anisotropie dessen homöotrope Orientierung (durch Behandlung der Plattenoberfläche) durch Anlegen einer Spannung parallel zu den Elektrodenoberflächen ausgerichtet, wodurch die Anzeige farbiger Bildelemente auf farblosem Untergrund ermöglicht wird.

Der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", (Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten $K_3/K_1$, hohe Werte für die optische Anisotropie $\Delta n$ und Werte für die dielektrische Anisotropie $\Delta\epsilon$ Werte -0,5 und -5 aufweisen müssen, um für hochinformative Anzeigeelemente basierend auf dem ECB-Effekt eingesetzt werden zu können.

Auf dem ECB-Effekt basierende elektrooptische Anzeigeelemente weisen eine homöotrope Randorientierung auf, d. h. die flüssigkristalline Phase hat eine negative dielektrische Anisotropie.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder. Ferner wird von technisch verwendbaren FK-Phasen eine flüssigkristalline Mesophase in einem geeigneten Temperaturbereich und eine niedrige Viskosität gefordert.

Es besteht somit noch ein großer Bedarf an flüssigkristallinen Phasen mit günstigen Mesobereichen, hohen Werten für $K_3/K_1$, hoher optischer Anisotropie $\Delta n$, negativer dielektrischer Anisotropie $\Delta\epsilon$ und hoher Langzeitstabilität.

Weiterhin eignen sich Verbindungen der Formel I als Komponenten chiral getilteter smektischer Phasen.

Chiral getiltete smektische flüssigkristalline Phasen mit ferroelektrischen Eigenschaften können hergestellt werden, indem man Basis-Mischungen mit einer oder mehreren getilteten smektischen Phasen mit

einem geeigneten chiralen Dotierstoff versetzt (L.A. Veresnev et al., Mol. Cryst. Liq. Cryst. 89, 327 (1982); H.R. Brand et al., J. Physique 44 (lett.), L-771 (1983)). Solche Phasen können als Dielektrika für schnell schaltende Displays verwendet werden, die auf dem von Clark und Lagerwall beschriebenen Prinzip der SSFLC-Technologie (N.A. Clark und S.T. Lagerwall, Appl. Phys. Lett. 36, 899 (1980); USP 4,367,924) auf der Basis der ferroelektrischen Eigenschaften der chiral getilteten Phase beruhen.

Es sind bisher bereits eine Reihe von flüssigkristallinen Verbindungen mit schwach negativer dielektrischer Anisotropie synthetisiert worden. Hingegen sind noch relativ wenig Flüssigkristallkomponenten mit großer negativer Anisotropie der Dielektrizitätskonstante bekannt. Zudem weisen letztere im allgemeinen Nachteile auf, wie z.B. schlechte Löslichkeit in Mischungen, hohe Viskosität, hohe Schmelzpunkte und chemische Instabilität. Es besteht daher ein Bedarf an weiteren Verbindungen mit negativer dielektrischer Anisotropie, die es erlauben, die Eigenschaften von Mischungen für verschiedenste elektrooptische Anwendungen weiter zu verbessern.

Flüssigkristallkomponenten mit negativer dielektrischer Anisotropie, welche zwei oder drei über Carboxylgruppen oder Kovalenzbindung verknüpfte Ringe und eine oder mehrere seitliche Gruppen, wie Halogen, Cyano oder Nitrogruppen aufweisen, sind bekannt aus DE 22 40 864, DE 26 13 293, DE 28 35 662, DE 28 36 086 und EP 023 728.

In der EP 084 194 und der DE 34 10 734 werden in einer breiten Formel die hier beanspruchten Verbindungen umfaßt. Jedoch sind dort keine Einzelverbindungen der erfindungsgemäßen Formel genannt. Der Fachmann konnte somit aus dem Stand der Technik weder in einfacher Art und Weise Synthesemöglichkeiten für die beanspruchten Verbindungen entnehmen noch erkennen, daß die erfindungsgemäßen Verbindungen überwiegend günstig gelegene Mesophasenbereiche aufweisen und sich durch eine große negative Anisotropie der Dielektrizität bei gleichzeitiger niedriger Viskosität auszeichnen.

Auch fehlt dort jeglicher Hinweis auf die Möglichkeit des Einsatzes der erfindungsgemäßen Verbindungen in Displays, die auf der SSFLC-Technologie beruhen, da die dort beanspruchten Verbindungen geringe smektische Tendenzen aufweisen.

In der DE 34 10 734 werden weiterhin symmetrische 2,3-Difluor-1,4-di(2-(alkylcyclohexyl)-ethyl)-benzole beschrieben, die jedoch den Anforderungen der modernen Display-Technologien in keinster Weise entsprechen.

Weiterhin sind Dibenzoesäureester des 2,3-Dichlorhydrochinons bekannt (z.B. Bristol et al., J. Org. Chem. 39, 3138 (1974) oder Clanderman et al., J. Am. Chem. Soc. 97, 1585 (1975)), die allerdings monotrop sind bzw. sehr kleine Mesophasenbereiche aufweisen. Die von Eidenschink et al. beschriebenen Ester der 4-Hydroxy-2,3-dichlorbenzoesäure (Angew. Chem. 89, 103 (1977)) besitzen ebenfalls nur schmale Mesophasenbereiche.

Die aus der DE OS 29 33 563 bekannten 4-Alkyl-2,3-dichlorphenyl-4'-alkylbicyclohexyl-4-carbonsäureester erlauben wegen ihrer hohen Viskosität keine technische Anwendung.

Der Erfindung lag die Aufgabe zugrunde stabile, flüssigkristalline oder mesogene Verbindungen mit einer großen negativen Anisotropie der Dielektrizität und gleichzeitig geringer Viskosität aufzuzeigen.

Es wurde gefunden, daß die Verbindungen der Formel I als Komponenten flüssigkristalliner Phasen vorzüglich geeignet sind. Insbesondere sind mit ihrer Hilfe stabile flüssigkristalline Phasen mit breitem Mesophasenbereich und vergleichsweise niedriger Viskosität herstellbar.

Weiterhin eignen sich die Verbindungen der Formel I als Komponenten chiral getilteter smektischer flüssigkristalliner Phasen.

Mit der Bereitstellung der Verbindungen der Formel I wird außerdem ganz allgemein die Palette der flüssigkristallinen Substanzen, die sich unter verschiedenen anwendungstechnischen Gesichtspunkten zur Herstellung flüssigkristalliner Gemische eignen, erheblich verbreitert.

Die Verbindungen der Formel I besitzen einen breiten Anwendungsbereich. In Abhängigkeit von der Auswahl der Substituenten können diese Verbindungen als Basismaterialien dienen, aus denen flüssigkristalline Phasen zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie und/oder die Viskosität und/oder die spontane Polarisation und/oder die Phasenbereiche und/oder den Tiltwinkel und/oder den Pitch eines solchen Dielektrikums zu varriieren.

Die Verbindungen der Formel I eignen sich ferner als Zwischenprodukte zur Herstellung anderer Substanzen, die sich als Bestandteile flüssigkristalliner Dielektrika verwenden lassen.

Die Verbindungen der Formel I sind in reinem Zustand farblos und bilden flüssigkristalline Mesophasen in einem für die elektrooptische Verwendung günstig gelegenen Temperaturbereich. Chemisch, thermisch und gegen Licht sind sie sehr stabil.

Gegenstand der Erfindung sind somit die Verbindungen der Formel I, insbesondere die Verbindungen der Formel Ia

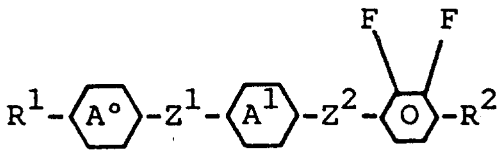

Ia

und die Verbindungen der Formel Ib

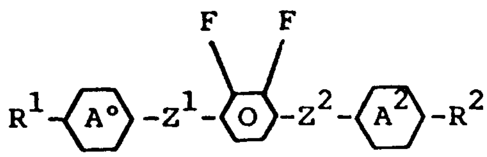

Ib .

Weiterhin ist Gegenstand der Erfindung die Verwendung der Verbindungen der Formel I als Komponenten flüssigkristalliner Medien. Gegenstand der Erfindung sind ferner flüssigkristalline Medien mit einem Gehalt an mindestens einer Verbindung der Formel I, sowie Flüssigkristall-Anzeigeelemente, die derartige Medien enthalten. Derartige Medien weisen besonders vorteilhafte elastische Konstanten auf, und eignen sich wegen ihrer niedrigen $\Delta\epsilon/\epsilon_{\perp}$ -Werte besonders für TFT-Mischungen.

Vor- und nachstehend haben $R^1$, $R^2$,

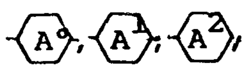

$Z^1$, $Z^2$ und m die angegebene Bedeutung, sofern nicht ausdrücklich etwas anderes vermerkt ist.

Die Verbindungen der Formel I umfassen dementsprechend Verbindungen mit drei Ringen der Teilformeln Ia und Ib:

$R^1$-A°-$Z^1$-$A^1$-$Z^2$-$PheF_2$-$R^2$ Ia

$R^1$-A°-$Z^1$-$PheF_2$-$Z^2$-$A^2$-$R^2$ Ib,

Verbindungen mit vier Ringen der Teilformeln Ic und Id

$R^1$-A°-A°-$Z^1$-$PheF_2$-$Z^2$-$A^2$-$R^2$ Ic

$R^1$-A°-A°-$Z^1$-$A^1$-$Z^2$-$PheF_2$-$R^2$ Id

In den Verbindungen der vor- und nachstehenden Formeln bedeuten $R^1$ und $R^2$ vorzugsweise Alkyl, ferner Alkoxy.

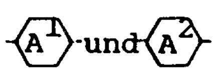

und

sind Phe, Pyd, Cyc, PheF und $PheF_2$, bevorzugt enthält die Verbindung der Formel I nicht mehr als einen der Reste $PheF_2$, Pyd,

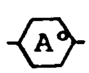

bedeutet Phe und Cyc.

$Z^1$ und $Z^2$ bedeuten vorzugsweise $-CH_2CH_2-$, -O-CO- oder -CO-O-, weiterhin $-CH_2O-$ oder $-O-CH_2$.

Unter den Verbindungen der Formeln Ia sind diejenigen besonders bevorzugt, worin $Z^1$ $-CH_2CH_2-$, -O-CO- oder -CO-O-, und $Z^2$ $-CH_2CH_2-$, -CO-O- oder $-CH_2O-$ bedeutet.

Unter den Verbindungen der Formeln Ib sind diejenigen besonders bevorzugt, worin $Z^1$ $-CH_2CH_2-$, $-CH_2-O-$, $-O-CH_2-$ oder -O-CO- und $Z^2$ $-CH_2CH_2-$, $-CH_2O-$, $-OCH_2-$ oder -CO-O- bedeutet. m ist vorzugsweise 0 oder 1.

$R^1$ und $R^2$ weisen in den vor- und nachstehenden Formeln vorzugsweise 1-13 C-Atome, insbesondere 3-12 C-Atome auf. Verbindungen der Formeln I, bei denen $R^1$ und $R^2$ 1-7 C-Atome, vorzugsweie 3-6 C-Atome aufweisen, eignen sich besonders für flüssigkristalline Phasen für auf dem ECB-Effekt basierende Anzeigeelemente. Verbindungen der Formel I dagegen, bei denen $R^1$ und $R^2$ 7-15 C-Atome, vorzugsweise 8-12 C-Atome aufweisen, eignen sich für flüssigkristalline Phasen mit ferroelektrischen Eigenschaften. In $R^1$ und $R^2$ können auch eine oder zwei $CH_2$-Gruppen ersetzt sein. Vorzugsweise ist nur eine $CH_2$-Gruppe ersetzt durch -O-, -CO-, -O-CO-, -CO-O- oder -OCO-O-, insbesondere durch -O-, -O-CO- oder -CO-O-.

In den vor- und nachstehenden Formeln bedeuten $R^1$ und $R^2$ vorzugsweise Alkyl, Alkoxy oder eine andere Oxaalkylgruppe, ferner auch Alkylgruppen, in denen ein oder mehrere $CH_2$-Gruppen durch eine Gruppierung ausgewählt aus der Gruppe -O-, -O-CO-, -CH=CH-, -CH-Halogen- und -CHCN- oder auch durch eine Kombination von zwei geeigneten Gruppierungen ersetzt sein können, wobei zwei Heteroatome nicht direkt miteinander verknüpft sind.

Falls $R^1$ und $R^2$ Alkylreste, in denen auch eine ("Alkoxy" bzw. "Oxaalkyl") oder zwei ("Alkoxyalkoxy" bzw. "Dioxaalkyl") nicht benachbarte $CH_2$-Gruppen durch O-Atome ersetzt sein können, bedeuten, so können sie geradkettig oder verzweigt sein. Vorzugsweise sind sie geradkettig, haben 2, 3, 4, 5, 6 oder 7 C-Atome und bedeuten demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl, 1,3-Dioxabutyl (= Methoxymethoxy), 1,3-, 1,4-, 2,4-Dioxapentyl, 1,3-, 1,4-, 1,5-, 2,4-, 2,5- oder 3,5-Dioxahexyl, 1,3-, 1,4-, 1,5-, 1,6-, 2,4-, 2,5-, 2,6-, 3,5-, 3,6- oder 4,6-Dioxaheptyl.

Falls $R^1$ und $R^2$ einen Alkenylrest bedeuten, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls $R^1$ und $R^2$ einen Alkylrest bedeuten, in dem eine $CH_2$-Gruppe durch -O-CO- oder -CO-O- ersetzt ist, so kann dieser geradkettig oder verzweigt sein. Vorzugsweise ist er geradkettig und hat 2 bis 6 C-Atome. Er bedeutet demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 3-Acetyloxypropyl, 3-Propionyloxypropyl, 4-Acetyloxybutyl, Methoxycarbonyl, Ethoxycarbonyl, Propoxycarbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)ethyl, 3-(Methoxycarbonyl)propyl, 3-(Ethoxycarbonyl)propyl, 4-(Methoxycarbonyl)-butyl.

Verbindungen der Formel I mit verzweigten Flügelgruppen $R^1$ und/oder $R^2$können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugte verzweigte Reste $R^1$ und/oder $R^2$ sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy, 2-Oxa-3-methylbutyl, 3-Oxa-4-methylpentyl, 4-Methylhexyl, 2-Nonyl, 2-Decyl, 2-Dodecyl, 6-Methyloctoxy, 6-Methyloctanoyloxy, 5-Methylheptyloxycarbonyl, 2-Methylbutyryloxy, 3-Methylvaleryloxy, 4-Methylhexanoyloxy, 2-Chlorpropionyloxy, 2-Chlor-3-methylbutyryloxy, 2-Chlor-4-methylvaleryloxy, 2-Chlor-3-methylvaleryloxy, 2-Methyl-3-oxapentyl, 2-Methyl-3-oxahexyl.

Formel I umfaßt sowohl die Racemate dieser Verbindungen als auch die optischen Antipoden sowie deren Gemische.

Unter den Verbindungen der Formeln I sowie Ia bis Id sind diejenigen bevorzugt, in denen mindestens einer der darin enthaltenen Reste eine der angegebenen bevorzugten Bedeutungen hat.

Von den dreikernigen Verbindungen der Teilformeln Ia und Ib sind die der Teilformeln I1 bis I10 bevorzugt:

$R^1$-Phe-$Z^1$-Phe-$Z^2$-$PheF_2$-$R^2$ I1

$R^1$-Phe-$Z^1$-Cyc-$Z^2$-$PheF_2$-$R^2$ I2

$R^1$-Phe-$Z^1$-Pyd-$Z^2$-$PheF_2$-$R^2$ I3

$R^1$-Cyc-$Z^1$-Cyc-$Z^2$-$PheF_2$-$R^2$ I4

$R^1$-Cyc-$Z^1$-Phe-$Z^2$-$PheF_2$-$R^2$ I5

$R^1$-Cyc-$Z^1$-$PheF_2$-$Z^2$-Phe-$R^2$ I6

$R^1$-Cyc-$Z^1$-$PheF_2$-$Z^2$-Cyc-$R^2$ I7

$R^1$-Phe-$Z^1$-$PheF_2$-$Z^2$-Phe-$R^2$ I8

$R^1$-Phe-$Z^1$-$PheF_2$-$Z^2$-Pyd-$R^2$ I9

$R^1$-Cyc-$Z^1$-$PheF_2$-$Z^2$-Pyd-$R^2$ I10

Von den vierkernigen Verbindungen der Formeln Ic und Id sind die der Teilformeln I11 bis I29 bevorzugt;

$R^1$-Phe-Phe-$Z^1$-Phe-$Z^2$-$PheF_2$-$R^2$ I11

$R^1$-Phe-Phe-$Z^1$-Cyc-$Z^2$-$PheF_2$-$R^2$ I12

$R^1$-Phe-Phe-$Z^1$-Pyd-$Z^2$-$PheF_2$-$R^2$ I13

$R^1$-Phe-Phe-$Z^1$-$PheF_2$-$Z^2$-Phe-$R^2$ I14

$R^1$-Phe-Phe-$Z^1$-$PheF_2$-$Z^2$-Cyc-$R^2$ I15

$R^1$-Cyc-Phe-$Z^1$-$PheF_2$-$Z^2$-Phe-$R^2$ I16

$R^1$-Cyc-Phe-$Z^1$-$PheF_2$-$Z^2$-Cyc-$R^2$ I17

$R^1$-Cyc-Phe-$Z^1$-Phe-$Z^2$-$PheF_2$-$R^2$ I18

$R^1$-Cyc-Phe-$Z^1$-Cyc-$Z^2$-$PheF_2$-$R^2$ I19

$R^1$-Cyc-Phe-$Z^1$-PheF-$Z^2$-$PheF_2$-$R^2$ I20

$R^1$-Cyc-Cyc-$Z^1$-PheF-$Z^2$-$PheF_2$-$R^2$ I21

$R^1$-Cyc-Cyc-$Z^1$-Phe-$Z^2$-$PheF_2$-$R^2$ I22

$R^1$-Cyc-Cyc-$Z^1$-Cyc-$Z^2$-$PheF_2$-$R^2$ I23

$R^1$-Cyc-Cyc-$Z^1$-$PheF_2$-$Z^2$-Phe-$R^2$ I24

$R^1$-Cyc-Cyc-$Z^1$-$PheF_2$-$Z^2$-Cyc-$R^2$ I25

$R^1$-Phe-Cyc-$Z^1$-$PheF_2$-$Z^2$-Phe-$R^2$ I26

$R^1$-Phe-Cyc-$Z^1$-$PheF_2$-$Z^2$-Cyc-$R^2$ I27

$R^1$-Phe-Cyc-$Z^1$-Phe-$Z^2$-$PheF_2$-$R^2$ I28

$R^1$-Phe-Cyc-$Z^2$-Cyc-$Z^2$-$PheF_2$-$R^2$ I29

Diejenigen der vorstehend genannten Formeln Ia bis Id und I1 bis I29, die eine oder mehrere Gruppen Pyd enthalten, umschließen jeweils die beiden möglichen 2,5-Stellungsisomeren.

In den vorstehend genannten Verbindungen bedeuten die Gruppen $Z^1$ und $Z^2$ jeweils unabhängig voneinander -CO-O-, -O-CO-, -$CH_2$O-, -$OCH_2$- oder -$CH_2CH_2$- bevorzugt -CO-O-, -O-CO- oder -$CH_2CH_2$-; in den Verbindungen der Formel I7 wird eine der Gruppen $Z^1$ oder $Z^2$ entsprechend der Maßgabe ausgewählt aus der Gruppe bestehend aus -O-CO-, -CO-O-, -$CH_2$O- und -$OCH_2$-.

Besonders bevorzugt sind Verbindungen der Formel I, bei denen $Z^2$ eine -CO-O- oder -O-CO-Gruppe bedeutet, insbesondere solche, die sich von der 2,3-Difluorbenzoesäure bzw. von 2,3-Difluorhydrochinon ableiten.

Insbesondere bevorzugt sind die Verbindungen der Formeln I welche in den folgenden Gruppen II-IV aufgeführt sind, wobei Alkyl und Alkoxy die angegebenen Bedeutungen besitzen.

II

Alkyl-Cyc-$CH_2$O-$PheF_2$-$CH_2CH_2$-Cyc-Alkyl
Alkyl-Cyc-CO-O-$PheF_2$-$CH_2CH_2$-Cyc-Alkyl
Alkyl-Phe-CO-O-$PheF_2$-$CH_2CH_2$-Cyc-Alkyl
Alkoxy-Phe-CO-O-$PheF_2$-$CH_2CH_2$-Cyc-Alkyl
Alkoxy-Phe-CO-O-$PheF_2$-O-CO-Cyc-Alkyl
Alkoxy-Phe-CO-O-$PheF_2$-O-CO-Phe-Alkyl
Alkoxy-Phe-CO-O-$PheF_2$-O-CO-Phe-Alkoxy
Alkoxy-Phe-CO-O-$PheF_2$-CO-O-Phe-Alkoxy
Alkoxy-Phe-O-CO-$PheF_2$-CO-O-Phe-Alkoxy
Alkyl-Phe-O-CO-$PheF_2$-CO-O-Phe-Alkoxy
Alkyl-Phe-O-CO-$PheF_2$-CO-O-Phe-Alkyl
Alkyl-Phe-O-CO-$PheF_2$-CO-O-Pyd-Alkyl
Alkyl-Cyc-$CH_2CH_2$-$PheF_2$-CO-O-Pyd-Alkyl
Alkyl-Cyc-$CH_2CH_2$-$PheF_2$-$CH_2CH_2$-Pyd-Alkoxy

III

Alkyl-Cyc-$CH_2CH_2$-Cyc-$CH_2CH_2$-$PheF_2$-Alkyl
Alkyl-Cyc-$CH_2CH_2$-Cyc-$CH_2CH_2$-$PheF_2$-Alkoxy
Alkyl-Cyc-$CH_2CH_2$-Cyc-CO-O-$PheF_2$-Alkoxy
Alkyl-Cyc-$CH_2CH_2$-Phe-CO-O-$PheF_2$-Alkyl
Alkyl-Cyc-$CH_2CH_2$-Phe-CO-O-$PheF_2$-Alkoxy
Alkyl-Cyc-$CH_2CH_2$-Phe-$CH_2$-O-$PheF_2$-Alkoxy
Alkyl-Phe-$CH_2CH_2$-Pyd-O-CO-$PheF_2$-Alkoxy
Alkoxy-Phe-$CH_2CH_2$-Pyd-O-CO-$PheF_2$-Alkoxy
Alkyl-Cyc-$CH_2CH_2$-Pyd-O-CO-$PheF_2$-Alkyl

IV

Alkyl-CycCyc-$CH_2CH_2$-$PheF_2$-$OCH_2$-Phe-Alkyl
Alkyl-CycCyc-$CH_2CH_2$-$PheF_2$-$OCH_2$-Phe-Alkoxy
Alkyl-CycCyc-$CH_2CH_2$-$PheF_2$-O-CO-Phe-Alkoxy
Alkyl-CycCyc-$CH_2CH_2$-$PheF_2$-O-CO-Phe-Alkyl
Alkyl-CycCyc-$CH_2CH_2$-$PheF_2$-O-CO-Cyc-Alkyl
Alkyl-CycCyc-$CH_2CH_2$-$PheF_2$-$CH_2CH_2$-Cyc-Alkyl

Die Verbindungen der Formel I werden nach an sich bekannten Methoden hergestellt, wie sie in der Literatur (z. B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Ausgangsstoffe können gewünschtenfalls auch in situ gebildet werden, derart, daß man sie aus dem Reaktionsgemisch nicht isoliert, sondern sofort weiter zu den Verbindungen der Formel I umsetzt.

Verbindungen der Formel I sind ausgehend von 1,2-Difluorbenzol zugänglich.

Dieses wird nach bekanntem Verfahren (z.B. A.M. Roe et al., J. Chem. Soc. Chem. Comm., 22, 582 (1965)) metalliert und mit dem entsprechenden Elektrophil umgesetzt. Mit dem so erhaltenen 1-substituierten 2,3-Diflurobenzol läßt sich diese Reaktionssequenz ein zweites Mal durchführen und man gelangt so zu den 1,4-disubstituierten 2,3-Difluorbenzol-Derivaten der Formel I. 1,2-Difluorbenzol bzw. 1-substituiertes 2,3-Difluorbenzol wird in einem inerten Lösungsmittel wie Diethylether, Tetrahydrofuran, Dimethoxyethan, tert-Butylmethylether oder Dioxan, Kohlenwasserstoffen wie Hexan, Heptan, Cyclohexan, Benzol oder Toluol oder Gemischen dieser Lösungsmittel gegebenenfalls unter Zusatz eine Komplexierungsmittels wie Tetramethylethylendiamin oder Hexamethylphosphorsäuretriamid mit Phenyllithium, Lithiumtetramethylpiperidin, n-, sek- oder tert-Butyllithium bei Temperaturen von -100 °C bis +50 °C vorzugsweise -78 °C bis 0 °C umgesetzt.

Die Lithium-2,3-difluorphenyl-Verbindungen werden bei -100 °C bis 0 °C vorzugsweise bei -50 °C mit den entsprechenden Elektrophilen umgesetzt. Geeignete Elektrophile sind Aldehyde, Ketone, Nitrile, Epoxide, Carbonsäure-Derivate wie Ester, Anhydride oder Halogenide, Halogenameisensäureester oder Kohlendioxid.

Zur Umsetzung mit aliphatischen Halogen-Verbindungen sind die Kalium-2,3-difluorphenyl-Verbindungen geeignet. Diese werden durch Transmetallierung der Lithium-Verbindungen mit Kalium tert. butylat bei -80° bis -120 °C erhalten.

Zur Umsetzung mit Verbindungen, die mehrere elektrophile Reaktionszentren besitzen (z.B. eine Aldehyd- neben einer Ester-Gruppe) werden die Lithium-2,3-difluorphenyl-Verbindungen transmetalliert. Besonders geeignet sind hierfür die Titan-2,3-difluorphenyl-Verbindungen.

Die Verbindungen der Formel I können hergestellt werden, indem man eine Verbindung, die sonst der Formel I entspricht, aber an Stelle von H-Atomen eine oder mehrere reduzierbare Gruppen und/oder C-C-Bindungen enthält, reduziert.

Als reduzierbare Gruppen kommen vorzugsweise Carbonylgruppen in Betracht, insbesondere Ketogruppen, ferner z.B. freie oder veresterte Hydroxygruppen oder aromatisch gebundene Halogenatome. Bevorzugte Ausgangsstoffe für die Reduktion entsprechen der Formel I, können aber an Stelle eines Cyclohexanrings einen Cyclohexenring oder Cyclohexanonring und/oder an Stelle einer $-CH_2CH_2-$-Gruppe eine $-CH=CH-$-Gruppe und/oder an Stelle einer $-CH_2-$-Gruppe eine -CO-Gruppe und/oder an Stelle eines H-Atoms eine freie oder eine funktionell (z.B. in Form ihres p-Toluolsulfonats) abgewandelte OH-Gruppe enthalten.

Die Reduktion kann z.B. erfolgen durch katalytische Hydrierung bei Temperaturen zwischen etwa 0 ° und etwa 200 ° sowie Drucken zwischen etwa 1 und 200 bar in einem inerten Lösungsmittel, z.B. einem Alkohol wie Methanol, Ethanol oder Isopropanol, einem Ether wie Tetrahydrofuran (THF) oder Dioxan, einem Ester wie Ethylacetat, einer Carbonsäure wie Essigsäure oder einem Kohlenwasserstoff wie Cyclohexan. Als Katalysatoren eignen sich zweckmäßig Edelmetalle wie Pt oder Pd, die in Form von Oxiden (z.B. $PtO_2$, PdO), auf einem Träger (z.B. Pd auf Kohle, Calciumcarbonat oder Strontiumcarbonat) oder in feinverteilter Form eingesetzt werden können.

Ketone können auch nach der Methode von Clemmensen (mit Zink, amalgamiertem Zink oder Zinn und Salzsäure, zweckmäßig in wäßrig-alkoholischer Lösung oder in heterogener Phase mit Wasser/Toluol bei Temperaturen zwischen etwa 80 und 120 °) reduziert werden.

Weiterhin sind Reduktionen mit komplexen Hydriden möglich. Beispielsweise können Arylsulfonyloxygruppen mit $LiAlH_4$ reduktiv entfernt werden, insbesondere p-Toluolsulfonyloxymethylgruppen zu Methylgruppen reduziert werden, zweckmäßig in einem inerten Lösungsmittel wie Diethylether oder THF bei Temperaturen zwischen etwa 0 und 100 °. Doppelbindungen können mit $NaBH_4$ oder Tributylzinnhydrid in Methanol hydriert werden.

Ester der Formel I können auch durch Veresterung entsprechender Carbonsäuren (oder ihrer reaktionsfähigen Derivate) mit Alkoholen bzw. Phenolen (oder ihren reaktionsfähigen Derivaten) erhalten werden.

Als reaktionsfähige Derivate der genannten Carbonsäuren eignen sich insbesondere die Säurehalogenide, vor allem die Chloride und Bromide, ferner die Anhydride, z. B. auch gemischte Anhydride, Azide oder Ester, insbesondere Alkylester mit 1-4 C-Atomen in der Alkylgruppe.

Als reaktionsfähige Derivate der genannten Alkohole bzw. Phenole kommen insbesondere die entsprechenden Metallalkoholate bzw. Phenolate, vorzugsweise eines Alkalimetalls wie Na oder K, in Betracht.

Die Veresterung wird vorteilhaft in Gegenwart eines inerten Lösungsmittels durchgeführt. Gut geeignet sind insbesondere Ether wie Diethylether, Di-n-butylether, THF, Dioxan oder Anisol, Ketone wie Aceton, Butanon oder Cyclohexanon, Amide wie DMF oder Phosphorsäurehexamethyltriamid, Kohlenwasserstoffe wie Benzol, Toluol oder Xylol, Halogenkohlenwasserstoffe wie Tetrachlorkohlenstoff oder Tetrachlorethylen und Sulfoxide wie Dimethylsulfoxid oder Sulfolan. Mit Wasser nicht mischbare Lösungsmittel können gleichzeitig vorteilhaft zum azeotropen Abdestillieren des bei der Veresterung gebildeten Wassers verwendet werden. Gelegentlich kann auch ein Überschuß einer organischen Base, z.B. Pyridin, Chinolin oder Triethylamin als Lösungsmittel für die Veresterung angewandt werden. Die Veresterung kann auch in Abwesenheit eines Lösungsmittels, z.B. durch einfaches Erhitzen der Komponenten in Gegenwart von Natriumacetat, durchgeführt werden. Die Reaktionstemperatur liegt gewöhnlich zwischen -50 ° und +250 °, vorzugsweise zwischen -20 ° und +80 °. Bei diesen Temperaturen sind die Veresterungsreaktionen in der Regel nach 15 Minuten bis 48 Stunden beendet.

Ein weiteres bevorzugtes Verfahren zur Herstellung der Ester ist eine Umsetzung einer Carbonsäure mit einem Alkohol oder Phenol in Gegenwart eines wasserentziehenden Mittels, gegebenenfalls mit einer organischen Base als Katalysator.

Besonders bevorzugt als wasserentziehendes Mittel sind Molekularsiebe oder Carbodiimide wie z.B. Dicyclohexylcarbodiimide. Ein besonders geeigneter basischer Katalysator ist 4-Dimethylaminopyridin.

Im einzelnen hängen die Reaktionsbedingungen für die Veresterung weitgehend von der Natur der verwendeten Ausgangsstoffe ab. So wird eine freie Carbonsäure mit einem freien Alkohol oder Phenol in der Regel in Gegenwart einer starken Säure, beispielsweise einer Mineralsäure wie Salzsäure oder Schwefelsäure, umgesetzt. Eine bevorzugte Reaktionsweise ist die Umsetzung eines Säureanhydrids oder insbesondere eines Säurechlorids mit einem Alkohol, vorzugsweise in einem basischen Milieu, wobei als Basen insbesondere Alkalimetallhydroxide wie Natrium- oder Kaliumhydroxid, Alkalimetallcarbonate bzw. -hydrogencarbonate wie Natriumcarbonat, Natriumhydrogencarbonat, Kaliumcarbonat oder Kaliumhydrogencarbonat, Alkalimetallacetate wie Natrium- oder Kaliumacetat, Erdalkalimetallhydroxide wie Calciumhydroxid oder organische Basen wie Triethylamin, Pyridin, Lutidin, Collidin oder Chinolin von Bedeutung sind. Eine weitere bevorzugte Ausführungsform der Veresterung besteht darin, daß man den Alkohol bzw. das Phenol zunächst in das Natrium- oder Kaliumalkoholat bzw. -phenolat überführt, z.B. durch Behandlung mit ethanolischer Natron- oder Kalilauge, dieses isoliert und zusammen mit Natriumhydrogencarbonat oder Kaliumcarbonat unter Rühren in Aceton oder Diethylether suspendiert und diese Suspension mit einer Lösung des Säurechlorids oder Anhydrids in Diethylether, Aceton oder DMF versetzt, zweckmäßig bei Temperaturen zwischen etwa -25 ° und +20 °.

Ether der Formel I sind durch Veretherung entsprechender Hydroxyverbindungen, vorzugsweise entsprechender Phenole, erhältlich, wobei die Hydroxyverbindung zweckmäßig zunächst in ein entsprechendes Metallderivat, z.B. durch Behandeln mit NaH, $NaNH_2$, NaOH, KOH, $Na_2CO_3$ oder $K_2CO_3$ in das entsprechende Alkalimetallalkoholat oder Alkalimetallphenolat übergeführt wird. Dieses kann dann mit dem entsprechenden Alkylhalogenid, -sulfonat oder Dialkylsulfat umgesetzt werden, zweckmäßig in einem inerten Lösungsmittel wie Aceton, 1,2-Dimethoxyethan, DMF oder Dimethylsulfoxid oder auch einem Überschuß an wäßriger oder wäßrig-alkoholischer NaOH oder KOH bei Temperaturen zwischen etwa 20° und 100°.

Die erfindungsgemäßen flüssigkristallinen Medien enthalten vorzugsweise neben einer oder mehreren erfindungsgemäßen Verbindungen als weitere Bestandteile 2 bis 40, insbesondere 4 bis 30 Komponenten. Ganz besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexan-carbonsäurephenyl- oder cyclohexyl-ester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexene, Cyclohexylcyclohexylcyclohexene, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylylethane, 1-Phenyl-2-cyclohexylphenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile erfindungsgemäßer Medien in Frage kommenden Verbindungen lassen sich durch die Formeln 1, 2, 3, 4 und 5 charakterisieren:

R'-L-E-R'' 1

R'-L-COO-E-R'' 2

R'-L-OOC-E-R'' 3

R'-L-$CH_2CH_2$-E-R'' 4

R'-L-C≡C-E-R'' 5

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R'' bedeuten in den Verbindungen der Teilformeln 1a, 2a, 3a, 4a und 5a jeweils unabhängig voneinander Alkyl, Alkenyl, Alkoxy, Alkenyloxy oder Alkanoyloxy mit bis zu 8 Kohlenstoffatomen. Bei den meisten dieser Verbindungen sind R' und R'' voneinander verschieden, wobei einer dieser Reste meist Alkyl oder Alkenyl ist. In den Verbindungen der Teilformeln 1b, 2b, 3b, 4b und 5b bedeutet R'' -CN, -$CF_3$, F, Cl oder -NCS; R hat dabei die bei den Verbindungen der Teilformeln 1a bis 5a angegebene Bedeutung und ist vorzugsweise Alkyl oder Alkenyl. Aber auch andere Varianten der vorgesehenen Substituenten in den Verbindungen der Formeln 1, 2, 3, 4 und 5 sind gebräuchlich. Viele solcher Substanzen oder auch Gemische davon sind im Handel erhältlich. Alle diese Substanzen sind nach literaturbekannten Methoden oder in Analogie dazu erhältlich.

Die erfindungsgemäßen Medien enthalten vorzugsweise neben Komponenten aus der Gruppe der Verbindungen 1a, 2a, 3a, 4a und 5a (Gruppe 1) auch Komponenten aus der Gruppe der Verbindungen 1b, 2b, 3b, 4b und 5b (Gruppe 2), deren Anteile vorzugsweise wie folgt sind:

Gruppe 1: 20 bis 90 %, insbesondere 30 bis 90 %,

Gruppe 2: 10 bis 80 %, insbesondere 10 bis 50 %,

wobei die Summe der Anteile der erfindungsgemäßen Verbindungen und der Verbindungen aus den Gruppen 1 und 2 bis zu 100 % ergeben.

Die erfindungsgemäßen Medien enthalten vorzugsweise 1 bis 40 %, insbesondere vorzugsweise 5 bis 30 % an erfindungsgemäßen Verbindungen. Weiterhin bevorzugt sind Medien, enthaltend mehr als 40 %, insbesondere 45 bis 90 % an erfindungegemäßen Verbindungen. Die Medien enthalten vorzugsweise drei, vier oder fünf erfindungsgemäße Verbindungen.

Die Herstellung der erfindungsgemäßen Medien erfolgt in an sich üblicher Weise. In der Regel werden die Komponenten ineinander gelöst, zweckmäßig bei erhöhter Temperatur. Durch geeignete Zusätze können die flüssigkristallinen Phasen nach der Erfindung so modifiziert werden, daß sie in allen bisher bekannt gewordenen Arten von Flüssigkristallanzeigeelementen verwendet werden können. Derartige Zusätze sind dem Fachmann bekannt und in der Literatur ausführlich beschrieben (H. Kelker/R. Hatz, Handbook of Liquid Crystals, Verlag Chemie, Weinheim, 1980). Beispielsweise können pleochroitische Farbstoffe zur Herstellung farbiger Guest-Host-Systeme oder Substanzen zur Veränderung der dielektrischen Anisotropie, der Viskosität und/oder der Orientierung der nematischen Phasen zugesetzt werden.

Die folgenden Beispiele sollen die Erfindung erläutern, ohne sie zu begrenzen. mp. = Schmelzpunkt, cp. = Klärpunkt. Vor- und nachstehend bedeuten Prozentangaben Gewichtsprozent; alle Temperaturen sind

in Grad Celsius angegeben.

"Übliche Aufarbeitung" bedeutet: man gibt Wasser hinzu, extrahiert mit Methylenchlorid, trennt ab, trocknet die organische Phase, dampft ein und reinigt das Produkt durch Kristallisation und/oder Chromatographie.

Es bedeuten ferner:

K: Kristallin-fester Zustand, S: smektische Phase (der Index kennzeichnet den Phasentyp), N: nematischer Zustand, Ch: cholesterische Phase, I: isotrope Phase. Die zwischen zwei Symbolen stehende Zahl gibt die Umwandlungstemperatur in Grad Celsius an.

Beispiel 1

Zu einem Gemisch von 0,1 mol 4-Propoxy-2,3-difluorbenzol, 0,09 mol Kalium-tert.butylat und 250 ml Tetrahydrofuran gibt man bei -100 °C 65 ml einer Lösung von 0,1 mol n-Butyllithium in Hexan. Nach 10minütigem Rühren wird das Gemisch mit einem Gemisch aus 0,1 mol trans-4-(trans-4-Propylcyclohexylethyl)-cyclohexylethyljodid, 0,1 mol N,N-Dimethylpropylenharnstoff und 100 ml Tetrahydrofuran versetzt. Nach 1stündigem Rühren bei -85 °C, Aufwärmen auf -40 °C und üblichem Aufarbeiten erhält man trans-4-(2-(4-Propoxy-2,3-difluorphenyl)-ethyl)-1-(2-(trans-4-propylcyclohexyl)ethyl)-cyclohexan.

Beispiel 2

Zu einem Gemisch von 0,1 mol 4-(2-(trans-4-Propylcyclohexyl)-ethyl)-2,3-difluorbenzoesäure (hergestellt aus 2,3-Difluorphenylkalium, erzeugt analog Beispiel 1, und trans-4-Propylcyclohexylethyljodid, durch anschließende Deprotonierung mit n-Buthyllithium und Carboxylierung mit Kohlendioxid), 0,1 mol 4-Pentylphenol, 1,0 mmol 4 N,N-Dimethylaminopyridin und 250 ml Methylenchlorid gibt man bei 0 °C 0,1 mol Dicyclohexylcarbodiimid in 80 ml Methylenchlorid. Nach 12stündigem Rühren bei Raumtemperatur und üblichem Aufarbeiten erhält man 4-(4-(2-(trans-4-Propylcyclohexyl)-ethyl)-2,3-difluorbenzoyloxy)-pentylbenzol.

Analog werden hergestellt:

4-(4-(2-(trans-4-Pentylcyclohexyl)-ethyl)-2,3-difluorbenzoyloxy)-pentylbenzol, K 45° $S_A$ 92° N 130,3° I

trans-4-(4-(trans-4-Pentylcyclohexyl)-ethyl)-2,3-difluorbenzoyloxy)-hexylcyclohexan, K 49°, $S_A$ 55° N 118° I

Beispiel 3

0,1 mol 4-(2-(trans-4-Pentylcyclohexyl)-ethyl)-benzoesäure werden mit 0,1 mol 2,3-Difluor-4-propylphenol nach Beispiel 2 verestert. Man erhält 4-(4-(2-(trans-4-Pentylcyclohexyl)-ethyl)-benzoyloxy)-2,3-difluorpropylbenzol.

Analog wird hergestellt:

4-(2-(trans-4-Pentylcyclohexyl)-ethyl)-1-(4-dodecyloxybenzoyloxy)-2,3-difluorbenzol, K 60° $S_C$ 81° N 127° I

Beispiel 4

0,1 mol 2,3-Difluor-p-hydrochinon werden nach Beispiel 2 mit 0,2 mol trans-4-Heptylcyclohexancarbonsäure und 0,2 mol Dicyclohexylcarbodiimid umgesetzt. Man erhält 1,4-Di-(trans-4-heptylcyclohexylcarbonyloxy)-2,3-difluorbenzol.

Analog werden hergestellt:

1,4-Di-(trans-4-pentylcyclohexylcarbonyloxy)-2,3-difluorbenzol, K 87° N 208° I 1,4-Di-(trans-4-octylcyclohexylcarbonyloxy)-2,3-difluorbenzol, K 80° $S_1$ 91 $S_2$ 103 $S_C$ 123 N 177 I

Beispiel 5

0,1 mol 1-(5-Hydroxypyridin-2-yl)-2-(4-heptoxyphenyl)ethan (hergestellt durch Monoalkylierung des Dianions von 5-Hydroxy-2-methylpyridin mit 4-Heptyloxybenzylbromid) werden mit 0,1 mol 2,3-Difluor-4-heptoxybenzoesäure nach Beispiel 2 verestert. Man erhält 5-(2,3-Difluor-4-heptoxybenzoyloxy)-2-(2-(4-heptoxyphenyl)-ethyl)-pyridin.

Analog wird hergestellt:

5-(2,3-Difluor-4-octyloxybenzoyloxy)-2-(2-(trans-4-heptylcyclohexyl)-ethyl)-pyridin, K 73° $S_C$ 115° N 134° I

Beispiel 6

Zu einer gut gerührten Lösung von 12,3 g Kaliumtertiärbutylat (t-BuOK) in 80 ml THF gibt man nacheinander bei -90 °C eine Lösung von 37,5 g 1,2-Difluor-3-(trans-4-n-propylcyclohexylmethoxy)-benzol in 70 ml THF, 68,5 ml einer 1,6 n Lösung von Butyllithium (BuLi) in Hexan und dann eine Lösung von 39,8 g trans-4-(trans-4-n-Propylcyclohexyl)cyclohexylethyljodid und 20 g 1,3-Dimethyltetrahydro-2-(1H)-pyrimidinon (DMPU) in 70 ml THF. Nachdem die Zugabe beendet ist, läßt man die schlecht rührbare Suspension langsam auf -40 °C erwärmen, gibt Wasser zu und arbeitet wie üblich auf. Man erhält trans4-Propylcyclohexylmethyl-[4-(2-(trans,trans-4'-propylbicyclohex-4-yl)-ethyl)-2,3-difluorphenyl]-ether.

Analog wird hergestellt:
Trans-4-pentylcyclohexylmethyl-(4-(2-(trans-4-pentylcyclohexyl)-ethyl)-2,3-difluorphenyl)-ether, K 76° $S_A$ -(72°) N 109,4° I

Beispiel 7

Eine Lösung von 0,05 mol 4-(trans-4-(trans-4-n-Propylcyclohexyl)-cyclohexylethyl-2,3-difluorphenol (herstellbar durch Umsetzung von 2,3-Difluoranisol mit äquimolaren Mengen an t-BuOK und BuLi in THF bei -90° und Alkylierung der Kaliumverbindung mit trans-4-(trans-4-n-Propylcyclohexyl)cyclohexylethyljodid in Gegenwart einer äquimolaren Menge von DMPU und anschließende Etherspaltung mit Bromwasserstoffsäure/Eisessig) und 0,05 mol trans-4-n-Pentylcyclohexancarbonsäure in Methylenchlorid (70 ml) werden bei 0 °C in Gegenwart einer katalytischen Menge von 4-N,N'-Dimethylaminopyridin (DMAP) mit 0,05 mol Dicyclohexylcarbodiimid (DCC) gelöst in Methylenchlorid versetzt. Man läßt das Reaktionsgemisch 12 Stunden bei Raumtemperatur rühren, trennt den ausgefallenen Dicyclohexylharnstoff ab und arbeitet wie üblich auf. Man erhält trans-4-Pentylcyclohexancarbonsäure-[4-(trans-4-(trans-4-propylcyclohexyl)-cyclohexylethyl)-2,3-difluorphenyl]-ester.

Analog werden hergestellt:
4-Octyloxybenzoesäure-[4-(2-(trans-4-pentylcyclohexyl)ethyl)-2,3-difluorphenyl]-ester, K 51° N 138° I
Trans-4-pentylcyclohexancarbonsäure-[4-(2-(trans-4-pentylcyclohexyl)-ethyl-2,3-difluorphenyl]-ester, K 58° N 151,8° I

Beispiel A:

Ein nematisches flüssigkristallines Medium bestehend aus
13 % p-trans-4-Propylcyclohexyl-benzonitril,
20 % trans-1-p-Methoxyphenyl-4-propylcyclohexan,
13 % trans-1-p-Butoxyphenyl-4-propylcyclohexan,
17 % 4-(4-(2-(trans-4-Pentylcyclohexyl)-ethyl)-benzoyloxy)-2,3-difluorpropylbenzol
3 % trans-4-(trans-4-Propylcyclohexyl)-cyclohexancarbonsäure-(trans-4-propylcyclohexylester),
3 % trans-4-(trans-4-Propylcyclohexyl)-cyclohexancarbonsäure-(trans-4-pentylcyclohexylester),
3 % trans-4-(trans-4-Butylcyclohexyl)-cyclohexancarbonsäure-(trans-4-pentylcyclohexylester),
3 % trans-4-(trans-4-Butylcyclohexyl)-cyclohexancarbonsäure-(trans-4-propylcyclohexylester),
5 % 4,4'-(trans-4-Propylcyclohexyl)-2-fluorbiphenyl,
4 % 4,4'-(trans-4-Propylcyclohexyl)-biphenyl,
4 % 4,4'-(trans-4-Pentylcyclohexyl)-2-fluorbiphenyl,
6 % 2,3-Difluor-4-[trans-4-(trans-4-pentylcyclohexyl)-cyclohexyl]-1-ethoxybenzol und
6 % 4-(trans-4-Pentylcyclohexyl)-4'-(trans-4-propylcyclohexyl)-biphenyl
zeichnet sich durch einen breiten nematischen Phasenbereich und eine niedrige Doppelbrechung aus.

Beispiel B

Ein nematisches flüssigkristallines Medium bestehend aus
19,8 % 4-(trans-4-Propylcyclohexyl)-ethylbenzol,
18,0 % 4-(trans-4-Propylcyclohexyl)-methoxybenzol,
13,5 % 4-(trans-4-Propylcyclohexyl)-ethoxybenzol,
17,1 % 4-(trans-4-Propylcyclohexyl)-4'-ethylbiphenyl,
12,6 % 4-(trans-4-Pentylcyclohexyl)-4'-ethylbiphenyl,
4,5 % 4,4'-Bis-(trans-4-Propylcyclohexyl)-biphenyl,
4,5 % 4,4'-Bis-(trans-4-Pentylcyclohexyl)-biphenyl und

10,0 % 5-(2,3-Difluor-4-octyloxybenzoyloxy)-2-(2-(trans-4-heptylcyclohexyl)-ethyl)-pyridin
weist einen Klärpunkt von 78,4 °C, Δn 0,1143 sowie eine Viskosität von 14,4 $mm^2/s$ auf.

**Patentansprüche**

**1.** Difluorbenzolderivate der Formel I,

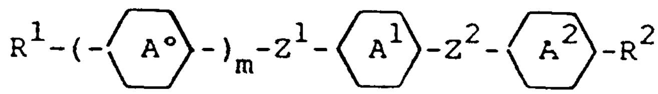 I

worin
$R^1$ und $R^2$
jeweils unabhängig voneinander unsubstituiertes, einfach durch Cyan oder mindestens einfach durch Fluor oder Chlor substituiertes Alkyl mit 1-15 C-Atomen oder Alkenyl mit 3-15 C-Atomen, wobei in diesen Resten auch eine $CH_2$-Gruppe durch -O-, -CO-, -O-CO-, -CO-O- oder -O-CO-O- ersetzt sein kann,

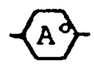

1,4-Phenylen oder trans-1,4-Cyclohexylen,
m
1 oder 2,

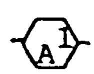 und 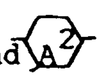

jeweils unabhängig voneinander trans-1,4-Cyclohexylen, oder unsubstituiertes oder ein oder zweifach durch Fluor substituiertes 1,4-Phenylen, worin auch eine CH-Gruppe durch N ersetzt sein kann , wobei mindestens eine der Gruppen $A^1$ und $A^2$ 2,3-Difluor-1,4-Phenylen ist,
$Z^1$ und $Z^2$
jeweils unabhängig voneinander -CO-O-, -O-CO-, $-CH_2O-$, $-OCH_2-$ oder $-CH_2CH_2-$bedeuten,
mit der Maßgabe, daß im Falle

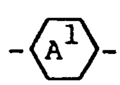

= 2,3-Difluor-1,4-Phenylen, m = 1 und

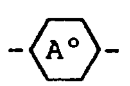 = 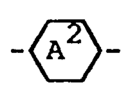

= trans-1,4-Cyclohexylen, $Z^1$ oder $Z^2$ gewählt wird aus der Gruppe bestehend aus -CO-O-, -O-CO-, $-CH_2O-$ und $-OCH_2-$.

**2.** Derivate des Difluorbenzols nach Anspruch 1, dadurch gekennzeichnet, daß m 1 bedeutet.

3. Derivate des Difluorbenzols nach Anspruch 2 gekennzeichnet durch die Formel Ia

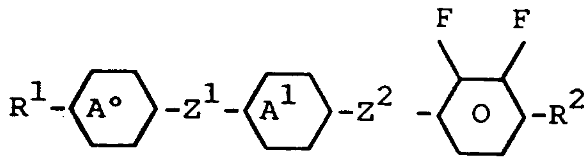

Ia

4. Derivate des Difluorbenzols nach Anspruch 2 gekennzeichnet durch die Formel Ib

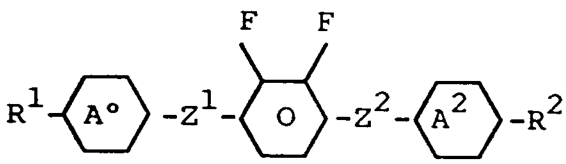

Ib

5. Derivate nach mindestens einen der Ansprüche 1 bis 4, dadurch gekennzeichnet, daß $R^1$ und $R^2$ jeweils unabhängig voneinander geradkettiges Alkyl oder Alkoxy mit 1 bis 15 C-Atomen bedeutet.

6. Verwendung der Verbindungen der Formel I als Komponenten flüssigkristalliner Medien.

## Claims

1. Difluorobenzene derivatives of the formula I

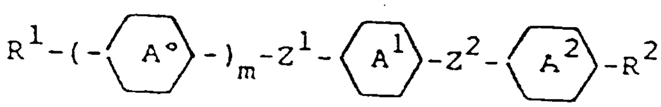

I

wherein

$R^1$ und $R^2$

independently of one another are each alkyl having 1-15 C atoms or alkenyl having 3-15 C atoms each of which is unsubstituted, monosubstituted by cyano or at least monosubstituted by fluorine or chlorine, it being possible for a $CH_2$ group in these radicals to be replaced by -O-, -CO-, -O-CO-, -CO-O- or -O-CO-O-,

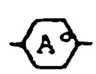

is 1,4-phenylene or trans-1,4-cyclohexylene,

m

is 1 or 2,

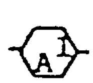 and 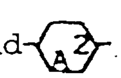.

independently of one another are each trans-1,4-cyclohexylene, or are 1,4-phenylene which is unsubstituted or mono-substituted or disubstituted by fluorine and in which it is also possible for one CH group to be replaced by N, at least one of the groups $A^1$ and $A^2$ being 2,3-difluoro-1,4-phenylene, and

$Z^1$ und $Z^2$

independently of one another are each -CO-O-, -O-CO-, $-CH_2O-$, $-OCH_2-$ or $-CH_2CH_2-$, subject to the

proviso that, in the event that

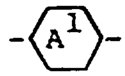

= 2,3-difluoro-1,4-phenylene, m = 1 and

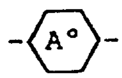 = 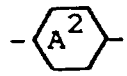

= trans-1,4-cyclohexylene, $Z^1$ or $Z^2$ is selected from the group consisting of -CO-O-, -O-CO-, $-CH_2O-$ and $-OCH_2-$.

2. Derivatives of difluorobenzene according to Claim 1, characterized in that m is 1.

3. Derivatives of difluorobenzene according to Claim 2, characterized in that they have the formula Ia

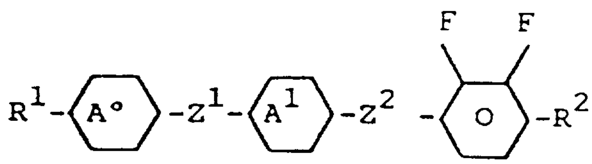

Ia

4. Derivatives of difluorobenzene according to Claim 2, characterized in that they have the formula Ib

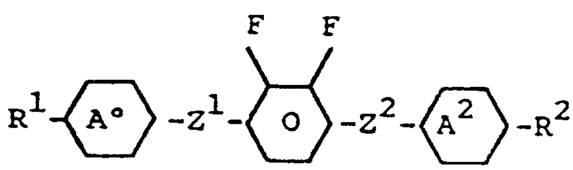

Ib

5. Derivatives according to at least one of Claims 1 to 4, characterized in that $R^1$ and $R^2$ independently of one another are each linear alkyl or alkoxy each of which has 1 to 15 C atoms.

6. The use of the compounds of the formula I as components of liquid-crystal media.

**Revendications**

1. Dérivés de difluorobenzène de formule I

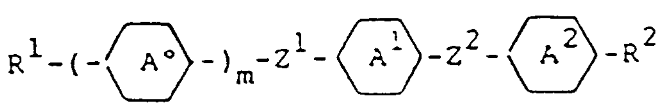

I

où
$R^1$ et $R^2$ représentent chacun indépendamment un alcoyle en $C_{1-15}$ ou un alcényle en $C_{3-15}$, non-substitué, monosubstitué par un cyano ou substitué par un fluor ou un chlore, où dans ces radicaux, un groupe $CH_2$ peut également être remplacé par -O-, -CO-, -O-CO-, -CO-O-ou -C-CO-O-,

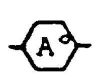

représente un 1,4-phénylène ou un trans-1,4-cyclohexylène,
m vaut 1 ou 2,

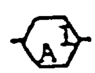 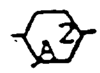

représentent chacun indépendamment l'un de l'autre un trans-1,4-cyclohexylène ou 1,4-phénylène non-substitué ou bisubstitué par un fluor ou encore un groupe CH peut être remplacé par N, où au moins l'un des groupes $A^1$ et $A^2$ est un 2,3-difluoro-1,4-phénylène,
$Z^1$ et $Z^2$ représentent chacun indépendamment l'un de l'autre -CO-O-, -O-CO-, $CH_2$-O-, -$OCH_2$- ou -$CH_2$-$CH_2$, avec cette précision que dans le cas où

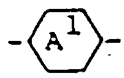

= 2,3-difluoro-1,4-phénylène, m = 1
et

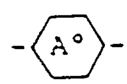 = 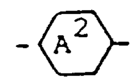

= trans-1,4-cyclohexylène, $Z^1$ ou $Z^2$ est choisi dans le groupe constitué par -CO-O-, -O-CO-, -$CH_2$-0- et -0$CH_2$-.

2. Dérivés de difluorobenzène selon la revendication 1, caractérisés en ce que m vaut 1.

3. Dérivés de difluorobenzène selon la revendication 2, caractérisés par la formule Ia

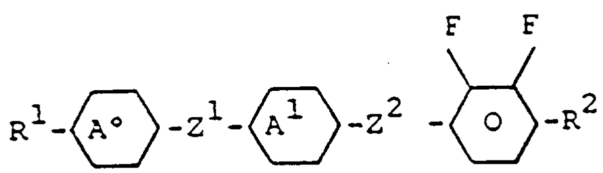

Ia

4. Dérivés de difluorobenzène selon la revendication 2, caractérisés par la formule Ib

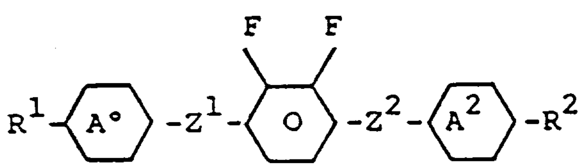

Ib

5. Dérivés selon au moins l'une des revendications 1 à 4, caractérisés en ce que $R^1$ et $R^2$ représentent chacun indépendamment l'un de l'autre un alcoyle à chaîne droite ou un alcoxy en $C_{1-15}$.

6. Application des composés de formule I comme composants de milieux à cristaux liquides.